# EUROPEAN PATENT APPLICATION

(11) **EP 0 721 968 A1**
(43) Date of publication of application: **17.07.1996**
(21) Application number: 95308575.0
(22) Date of filing: 29.11.1995
(51) Int. Cl.: C08J 7/04

(54) **Method for improving paint adhesion**

(30) Priority: 10.01.1995 US 370912
(71) Applicant: BETZ EUROPE, INC., Trevose, PA 19053-6783 (US)
(72) Inventor: Gunagan, Barry Paul, Hatboro, PA 19040 (US)
(74) Representative: W.P. Thompson & Co.

(57) **Abstract**

There is disclosed a method for preparing a polypropylene or polypropylene-based plastic surface for painting. The methods utilize applying an aqueous solution of a chlorinated polyolefin to the plastic surface in the last stage of a cleaning process prior to painting.

## Description

### FIELD OF THE INVENTION

The present invention provides for the use of chlorinated polyolefin resins in the final stage of a power washer to improve adhesion of paint to polypropylene based plastics.

### BACKGROUND OF THE INVENTION

The use of polypropylene based materials is increasing because of their low cost, flexibility, and durability. The apolar, inert nature of the polypropylene makes it difficult for paint to adhere to its surface because there are no reactive groups in the plastic to form bonds with the paint.

In preparation for painting, plastics such as thermoplastic olefin (TPO, a blend of polypropylene (PP) and ethylene-propylene-diene monomer (EPDM)) are cleaned with aqueous solutions of alkaline or acidic cleaning solutions in a multi-stage power washer. After cleaning the parts are also rinsed in a power washer several times to remove the cleaning chemicals and contaminants. In the case of most plastics, the parts are then transported to a painting operation where decorative paints (often a colored base coat followed by a clear coat) are applied. This typical pretreatment/paint process will not provide good paint adhesion on TPO.

One popular technology for improving paint adhesion to TPO involves the use of an adhesion promoting primer prior to topcoating. However, many of these adhesion promoting primers contain high amounts of solvent that make it difficult to comply with federal or state solvent emission laws. These products prove difficult to use because the thickness of the primer coat is critical to the resultant adhesion as too thin of a layer leads to adhesive failures and too thick of a layer leads to cohesive failures. The use of this technology is costly as the primers contain considerable VOCs and the additional painting operation involves added equipment and labor.

The present invention is an improvement over these processes as the chlorinated polyolefin can be applied in the final stage of the power washer and eliminate labor and equipment costs necessary for applying the primer coat.

### DESCRIPTION OF THE RELATED ART

U.S. Patent No. 4,303,607 teaches a process for preparing a polyolefin surface for painting by priming a combination of a chlorinated polypropylene and a chlorinated polypropylene containing carboxylic anhydride groups. This primer coat is then cured by exposing the primed surface to ultraviolet radiation. The UV radiation must be applied by a source having a wave length range of 200-500 nm for a time necessary to achieve an optimum radiation energy range. The use of the UV radiation is necessary to cure the primer coat for satisfactory paint adhesion.

U.S. Patent No. 5,227,198 teaches a composition for coating polyolefinic-containing surfaces. This composition comprises a polyol, a surfactant, a halogenated polyolefin resin material and an aliphatic amine in an aqueous solution. This composition can be applied to polyolefinic substrates as a primer coat for paints and adhesives.

### DETAILED DESCRIPTION OF THE INVENTION

The present invention provides for methods for preparing a polypropylene or polypropylene-based plastic surface for painting comprising contacting the plastic surface with an aqueous solution of a chlorinated polyolefin.

The chlorinated polyolefin compounds are water-soluble polymeric materials that may be prepared by known methods such as those described in U.S. Patent Nos. 4,070,421 and 4,954,573 which are herein incorporated by reference. The chlorinated polyolefins which are useful in the methods of the present invention are available from Eastman Chemical Company, Kingsport, TN, under the trade names CP-310W, CP-347W, and CP-349W.

The chlorinated polyolefin compound is applied to the polypropylene or polypropylene-based surface in the last stage of a cleaning process. This stage generally uses a power washer in the last cleaning step to remove debris and cleaning chemicals from the surface being cleaned. In the methods of the present invention, the chlorinated polyolefin is sprayed onto the polypropylene by the power washer and is not removed by rinsing or other chemical or mechanical means. The polypropylene surface can then be painted without the further addition of a primer coat.

Other means for contacting the polypropylene surface are also anticipated to be effective. Apart from power washing, other spraying and immersion techniques are also anticipated to be effective means of applying the chlorinated polyolefin.

Sufficient contact time must be allowed between the chlorinated polyolefin and the polypropylene surface to be treated. This time is generally that in which complete wetting of the surface occurs.

The chlorinated polyolefin can be applied to the polypropylene surface by way of any suitable carrier agent or solvent. Preferably, this solvent is water and most preferably is deionized water. The chlorinated polyolefin is generally applied to the polypropylene surface as a concentrate in a range from about 1.0 to about 3.0%.

The chlorinated polyolefin compounds may also be employed in conjunction with wetting agents. These may improve the wettability of the polypropylene surface and it is anticipated that any surfactant that lowers the surface tension of water on the polypropylene surface will prove useful in the methods of the present invention. Modified oxyethylated straight chain alcohols are relevant examples of these surfactants.

Although the means by which the improved adherence of paint to the polypropylene surface is not fully known, the present inventor theorizes that the chlorinated polyolefin "reacts" with the polypropylene to change its apolar and inert nature. It is to be understood that this theory of operation in no way limits the methods of the present invention.

The invention will now be further described with reference to a number of specific examples which are to be regarded solely as illustrative, and not as restricting the scope of the invention.

### Examples

Automotive grade thermoplastic olefin was processed according to the following sequence:
- Stage 1 -: 2% Permatreat® 328 at 140°F for 60 seconds.
- Stage 2 -: tap water rinse for 10 seconds
- Stage 3 -: application of chlorinated polyolefins solutions with an added surfactant to facilitate wetting

Permatreat® 328 is available from Betz Laboratories, Inc., Trevose, PA.

The samples were then painted with red spot base coat 206L (avg. 1.0 mils) and red spot clear coat 317LE (avg. 1.4 mils). The base coat was mixed with red spot catalyst LE 9428F at a ratio of 3.3:1 and reduced with 2.15 parts SV4167 thinner. The clear coat was mixed with red spot catalyst LE 9428F at a ratio of 4.1:1.

The painted pieces were then baked for 30 minutes at 250°F and allowed to cool. A paint retention tape test was performed where 0% represents no adhesion and 100% represents excellent adhesion. The results of this testing are reported in Table I.

**TABLE I**

| Stage 3 Treatment | Surfactant (mL/L) | % Paint Retention (3 tape pulls/piece) | | |
|---|---|---|---|---|
| | | First | Second | Third |
| A (1 mL/L) | 2 | 100 | 82 | 68 |
| A (1 mL/L) | 2 | 99 | 98 | 98 |
| A (10 mL/L) | 3 | 100 | 100 | 100 |
| A (10 mL/L) | 3 | 100 | 100 | 100 |
| B (1 mL/L) | 2 | 94 | 90 | 82 |
| B (1 mL/L) | 2 | 81 | 77 | 67 |
| B (10 mL/L) | 2 | 100 | 100 | 100 |
| B (10 mL/L) | 2 | 100 | 100 | 100 |
| C (1 mL/L) | 2 | 100 | 100 | 100 |
| C (1 mL/L) | 2 | 100 | 94 | 90 |
| C (10 mL/L) | 2 | 100 | 100 | 100 |
| C (10 mL/L) | 2 | 100 | 100 | 100 |
| DI water | -- | 13 | ----- | ----- |
| DI water | -- | 49 | 25 | 23 |
| DI water (primed*) | -- | 100 | 100 | 100 |
| DI water (primed*) | -- | 100 | 100 | 100 |
| Treatment A is CP 310W available from Eastman Chemical Company. Treatment B is CP 347W available from Eastman Chemical Company Treatment C is CP 349W available from Eastman Chemical Company | | | | |

| | | | | |
|---|---|---|---|---|
| * parts processed with DI water rinse in stage 3, then primed with an adhesion promoting primer to represent a typical industrial process with the current technology. | | | | |

These testing results indicate that the chlorinated polyolefins of the present invention provide for a polypropylene surface that is very adherent of paint when applied as the last stage in a cleaning process prior to painting. In instances when the concentration of the aqueous chlorinated polyolefin is increased (10 mUL), paint adherence was still excellent after 3 tape pulls.

The improvement evidenced by the present invention is that the chlorinated polyolefins "react" with the polypropylene and polypropylene-based plastics. This allows for the chlorinated polyolefin to be applied to the plastic in the last stage of a multi-stage power washer. This eliminates the need for a primer process and the difficulties inherent in the use of primers, such as volatile solvents and criticality of primer thickness.

While this invention has been described with respect to particular embodiments thereof, it is apparent that numerous other forms and modifications of this invention will be obvious to those skilled in the art. The appended claims and this invention generally should be construed to cover all such obvious forms and modifications which are within the true spirit and scope of the present invention.

## Claims

1. A method for preparing a polypropylene-based plastic surface for painting comprising applying to said plastic surface an aqueous solution of a chlorinated polyolefin.

2. A method as claimed in claim 1, wherein the concentration of said chlorinated polyolefin is from about 1.0 to about 3.0%.

3. A method as claimed in claim 1 or 2, wherein said chlorinated polyolefin is applied by spraying.

4. A method as claimed in any one of the preceding claims, wherein said plastic surface is immersed in said aqueous solution of chlorinated polyolefin.

5. A method as claimed in any one of the preceding claims, wherein said chlorinated polyolefin is not removed from said plastic surface prior to painting.

6. A method for preparing a polypropylene-based plastic surface for painting after a cleaning operation, comprising applying to said plastic surface in the last cleaning step an aqueous solution of a chlorinated polyolefin.

7. A method as claimed in claim 6 wherein the concentration of said chlorinated polyolefin is from about 1.0 to about 3.0%.

8. A method as claimed in claim 6 or 7, wherein said chlorinated polyolefin is applied by spraying.

9. A method as claimed in claim 6, 7 or 8 wherein said plastic surface is immersed in said aqueous solution of chlorinated polyolefin.

10. A method as claimed in any one of claims 6 to 9, wherein said chlorinated polyolefin is not removed from said plastic surface prior to painting.
